# FASCICULE DE BREVET EUROPEEN

(11) **EP 1 352 828 B1**
(45) Date de publication et mention de la délivrance du brevet: **31.08.2005**
(21) Numéro de dépôt: 03290851.9
(22) Date de dépôt: 04.04.2003
(51) Int. Cl.: B64D 11/06, B60N 2/22, B60N 3/06, B60N 2/34

(54) **Siège à synchronisation mécanique du dossier et du repose jambes**
Sitz mit mechanischer Synchronisierung von Rückenlehne und Beinstütze
Seat with mechanical synchronisation of the backrest and legrest

(30) Priorité: 08.04.2002 FR 0204374
(43) Date de publication de la demande: 15.10.2003
(73) Titulaire: Société Industrielle et Commerciale de Matériel Aéronautique, F-36100 Issoudun (FR)
(72) Inventeur: Ligonnière, Laurent, 36260 Poncet la Ville (FR)
(74) Mandataire: Geismar, Thierry

(56) Documents cités:
- EP-A- 1 074 468
- FR-A- 2 776 586
- GB-A- 2 179 846
- GB-A- 2 331 007
- US-A- 2 326 972

## Description

L'invention se rapporte à un siège pour avion dont les mouvements du dossier et du repose jambes sont liés et synchronisés.

Le document EP-1 044 878 décrit un siège comprenant un dossier réglable en inclinaison, une assise réglable en inclinaison, un repose jambes réglable en inclinaison et une coque fixe de séparation arrière disposée derrière le dossier du siège, une extrémité du repose jambes étant montée à pivot à l'extrémité avant de l'assise. Les parois latérales de la coque fixe de séparation comprend des glissières dans lesquelles des pignons fixés sur le dossier peuvent se déplacer au fur et à mesure de l'inclinaison du dossier. Le mouvement du repose jambes par rapport à l'assise est commandé par un processeur programmé en fonction de l'emplacement des pignons dans les glissières. L'organe de commande du mouvement du repose jambes est disposé entre l'assise et le repose jambes.

On connaît également par le document GB-A-217986 un siège selon le préambule de la revendication 1.

Toutefois, dans ces documents, la synchronisation des mouvements du repose jambes et du dossier est réalisée grâce à la liaison du mouvement du dossier à la coque par l'intermédiaire des glissières.

Ceci présente un certain nombre d'inconvénients, notamment, cette synchronisation ne peut être réalisée pour un siège dont les éléments sont indépendants de la coque fixe ou pour un siège ne comprenant pas de coque fixe.

L'invention vise à palier ces inconvénients.

Plus particulièrement, l'invention a pour but de fournir un siège pour lequel les mouvements du dossier et du repose jambes sont synchronisés mécaniquement indépendamment d'une éventuelle coque fixe.

L'invention permet également de réaliser cette synchronisation en limitant le nombre d'actionneurs nécessaires à l'obtention des mouvements.

A cet effet, l'invention a pour objet un siège selon la revendication 1.

Dans un mode de réalisation particulier, les moyens mécaniques de synchronisation comprennent :
- au moins une pièce de liaison comportant trois axes d'articulation, un premier axe d'articulation étant relié à la structure d'assise à proximité de la liaison pivot entre le repose jambes et la structure d'assise, à une certaine distance de celle-ci;
- au moins une bielle dont une extrémité est reliée à pivot à un deuxième axe d'articulation de ladite pièce de liaison et l'autre extrémité est reliée à pivot à la structure de dossier à distance de la liaison pivot entre la structure de dossier et la structure de support, entre ladite liaison pivot et l'extrémité inférieure de la structure de dossier ;
- au moins une biellette dont une extrémité est reliée à pivot à un troisième axe d'articulation de ladite pièce de liaison et l'autre extrémité est reliée à pivot au repose jambes à proximité de la liaison pivot entre le repose jambes et la structure d'assise, à une certaine distance de celle-ci.

Le repose jambe est ainsi relié au dossier et suit le mouvement de ce dernier.

Lorsque le dossier passe d'une position verticale à une position inclinée, la bielle se déplace suivant la direction longitudinale du siège, provoquant la rotation de la pièce de liaison autour de son premier axe et par conséquent le déplacement de la biellette et du repose jambes.

Il n'est ainsi pas nécessaire de prévoir un actionneur du repose jambes, ni des capteurs pour déterminer la position du dossier et/ou du repose jambes.

Egalement dans un mode de réalisation particulier, les axes d'articulation de la pièce de liaison s'étendent suivant une direction perpendiculaire à la direction longitudinale du siège.

Egalement dans un mode de réalisation particulier, les trois axes d'articulation de la pièce de liaison ne sont pas situés dans un même plan.

Egalement dans un mode de réalisation particulier, la pièce de liaison présente une forme sensiblement triangulaire, les trois axes d'articulation étant situés chacun dans un angle de ladite pièce.

Cette disposition permet la conservation de la position verticale du repose jambes quelque soit l'inclinaison de l'assise, lorsque le dossier est en position verticale.

Egalement dans un mode de réalisation particulier, la structure de dossier comprend des montants latéraux, l'extrémité inférieure d'au moins un montant étant reliée à pivot à la bielle.

La liaison entre la bielle et le dossier est ainsi située sensiblement au niveau de l'assise lorsque celle-ci est horizontale, ou en dessous de l'assise lorsque celle-ci est inclinée. Cette disposition permet d'éviter que la bielle soit gênée par l'assise.

Egalement dans un mode de réalisation particulier, la biellette est un vérin limiteur de charge.

Ainsi, ce vérin permet d'amortir la charge supportée par les différentes pièces lorsqu'une charge élevée est exercée sur le repose jambes (par exemple par le passager).

Egalement dans un mode de réalisation particulier, la bielle s'étend sensiblement suivant la direction longitudinale du siège, la biellette s'étendant dans un plan sensiblement vertical contenant la bielle.

Par direction longitudinale, on entend la direction orientée depuis la partie du repose jambes la plus éloignée de l'assise vers la partie la plus éloignée du dossier où se trouve généralement un appui-tête.

Egalement dans un mode de réalisation particulier, les moyens mécaniques de synchronisation comprennent deux ensembles formés chacun d'une bielle, d'une biellette et d'une pièce de liaison, disposés chacun sur un côté du siège.

Les forces appliquées sont ainsi réparties et équilibrées sur les deux bords latéraux du repose jambes.

Egalement dans un mode de réalisation particulier, le siège comporte un repose pieds mobile en translation par rapport au repose jambes, et un actionneur commandant la translation dudit repose pieds.

Egalement dans un mode de réalisation particulier, la structure de support comprend une partie supérieure mobile supportant la structure d'assise et une partie inférieure fixe, ladite partie supérieure étant mobile en translation par rapport à la partie inférieure suivant la direction longitudinale du siège, la structure de dossier étant reliée à pivot à ladite partie supérieure.

Egalement dans un mode de réalisation particulier, le siège comprend au moins un actionneur de commande de l'inclinaison de la structure de dossier par rapport à la structure de support.

Egalement dans un mode de réalisation particulier, le siège comprend au moins un actionneur de commande de l'inclinaison de la structure d'assise.

Ainsi, cet actionneur commande à la fois l'inclinaison du dossier et celle du repose jambes, permettant d'éviter la présence d'un actionneur pour le repose jambes.

Notamment, une extrémité de l'actionneur de commande de l'inclinaison de la structure d'assise peut être reliée à pivot audit premier axe d'articulation de la pièce de liaison et l'autre extrémité dudit actionneur est reliée à pivot sur la partie avant de la structure de support.

Egalement dans un mode de réalisation particulier, le siège comprend des moyens de commande de l'inclinaison de la structure de dossier et de la structure d'assise.

Egalement dans un mode de réalisation particulier, les moyens de commande comprennent un boîtier de commande électronique coopérant avec les actionneurs de commande et coopérant en outre avec des moyens pouvant être actionnés par l'utilisateur pour régler la position du siège.

Egalement dans un mode de réalisation particulier, l'ajustement des déplacements des différents éléments mobiles du siège est réalisé par réglage du boîtier de commande et/ou des actionneurs.

On décrira maintenant à titre d'exemple non limitatif un mode de réalisation particulier de l'invention en référence aux dessins schématiques annexés dans lesquels :

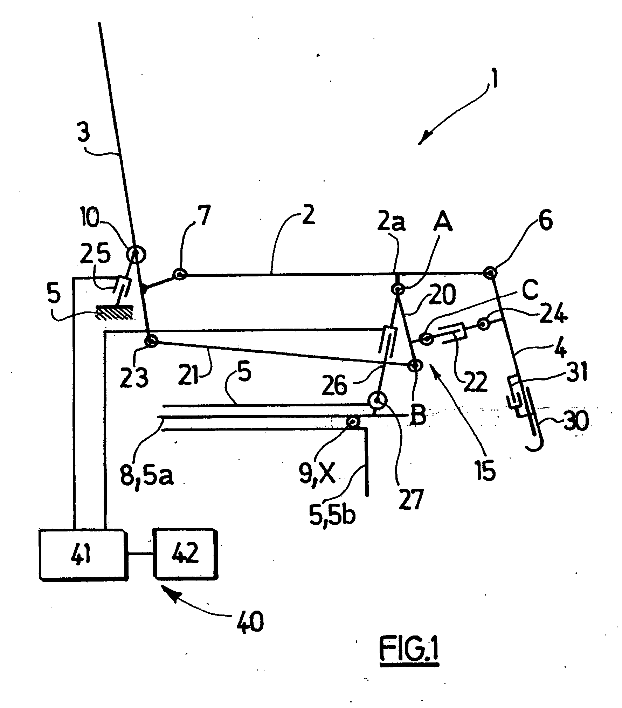

- la figure 1 est une représentation schématique du siège selon l'invention ;
- la figure 2 est une représentation schématique du siège en position de décollage, le dossier étant en position verticale ,
- la figure 3 est une représentation schématique du siège en position inclinée,
- la figure 4 est une représentation schématique du siège en position allongée.

Le siège 1 comprend une structure d'assise 2, une structure de dossier 3, un repose jambes 4 et une structure de support 5 de la structure d'assise 2 et de la structure de dossier 3.

Une extrémité du repose jambes 4 est reliée par une liaison pivot 6 à l'extrémité avant 2a de la structure d'assise 2.

L'autre extrémité de la structure d'assise 2 est montée pivotante par rapport à la structure de dossier 3 autour d'un axe 7. Cet axe 7 est disposé sur la partie inférieure de la structure de dossier 3.

La structure d'assise 2 est également mobile en translation par rapport à la structure de support 5 suivant la direction longitudinale du siège.

La structure de support 5 comporte deux parties : une partie inférieure 5b fixe et solidaire du sol de l'avion et une partie supérieure 5a supportant la structure d'assise 2.

La partie supérieure 5a est mobile en translation par rapport à la partie inférieure 5b fixe. Cette liaison glissière est par exemple réalisée par un système de glissières ou de crémaillère commandés par un actionneur.

Dans un autre mode de réalisation non représenté, les parties inférieure 5b et supérieure 5a de la structure de support 5 sont fixes.

Dans le mode de réalisation représenté sur les figures, l'actionnement du mouvement de la glissière est réalisé au moyen de crémaillères 8 fixées sur la partie supérieure 5a, de chaque côté de la structure d'assise 2 et de pignons 9 disposés de chaque côté de la structure d'assise 2 sur un arbre X sensiblement horizontal monté à pivot sur la partie inférieure 5b. Les pignons 9 viennent s'engrener dans les crémaillères 8 de façon à les déplacer.

Un actionneur disposé sur l'arbre X entraîne ce dernier en rotation et par conséquent fait tourner les pignons 9 entraînant ainsi la translation des crémaillères 8.

La structure de dossier 3 est reliée à la structure de support 5 par une liaison pivot 10. Cette liaison pivot est située sur la partie supérieure 5a de la structure de support.

La structure de dossier 3 comprend des montants latéraux 11 qui s'étendent suivant la direction longitudinale de la structure de dossier 3.

L'extrémité inférieure 12 de chaque montant est située à distance de la liaison pivot 10 de la structure de dossier, de sorte qu'elle se situe en dessous du niveau de la structure d'assise 2. Cette extrémité inférieure 12 peut être d'une pièce avec le montant 11 ou être formée d'une pièce rendue solidaire du montant 11.

Les moyens mécaniques de synchronisation 15 comprennent de chaque côté du siège, une pièce de liaison 20 reliée à une bielle 21 et une biellette 22.

La pièce de liaison 20 comporte trois axes d'articulation A, B, C qui s'étendent suivant une direction perpendiculaire à la direction longitudinale du siège 1.

En particulier, les trois axes d'articulation de la pièce de liaison ne sont pas situés dans un même plan.

La pièce de liaison 20 présente par exemple une forme sensiblement triangulaire, les trois axes d'articulation A, B, C étant situés chacun dans un angle de ladite pièce.

La bielle 21 s'étend sensiblement suivant la direction longitudinale du siège, la biellette 22 s'étendant dans un plan sensiblement vertical contenant la bielle 21 et la pièce de liaison 20.

La bielle 21, la biellette 22 et la pièce de liaison 20 sont ainsi disposées en dessous de la surface de la structure d'assise 2, entre la structure d'assise 2 et la structure de support 5.

Le premier axe d'articulation A est relié à la structure d'assise 2 à proximité de la liaison pivot 6 entre le repose jambes 4 et la structure d'assise 2, à une certaine distance de celle-ci.

Le deuxième axe d'articulation B de la pièce de liaison 20 est relié à une extrémité de la bielle 21.

L'autre extrémité de la bielle 21 est reliée par une liaison pivot 23 à l'extrémité inférieure 12 du montant 11 de la structure de dossier 3, à distance de la liaison pivot 10 entre la structure de dossier 3 et la structure de support 5, entre ladite liaison pivot 10 et l'extrémité inférieure 12 de la structure de dossier.

Le troisième axe d'articulation C de la pièce de liaison 20 est relié à une extrémité de la biellette 22.

L'autre extrémité de la biellette 22 est reliée par une liaison pivot 24 au repose jambes 4 à proximité de la liaison pivot 6 entre le repose jambes 4 et la structure d'assise 2, à une certaine distance de celle-ci.

La biellette 22 peut être un vérin limiteur de charge. Il peut s'agir par exemple d'un vérin à gaz de type « brake over » qui fonctionne comme une simple biellette et qui se comprime lorsque le repose jambes 4 est en surcharge pour le délester.

L'inclinaison de la structure de dossier 3 par rotation autour de la liaison pivot 10 est commandée par au moins un actionneur 25 de commande relié à la structure de support 5.

L'inclinaison de la structure de dossier 3 est réalisée par des engrenages comprenant un secteur de roue 28 et un pignon 29.

Un secteur de roue 28 est disposé de chaque côté de la structure de dossier 3 et un arbre X, sensiblement horizontal, fixé en liaison pivot sur la partie supérieure 5a porte un pignon 29 de chaque côté du dossier, chaque pignon 29 venant en prise avec un secteur de roue 28. L'arbre X est motorisé par l'actionneur rotatif 25.

Cet arbre X est commun à l'axe commandant la translation de la partie supérieure 5a de la structure de support 5. L'inclinaison de la structure de dossier 3 est ainsi synchronisée avec la translation de la structure d'assise 2.

L'inclinaison de la structure d'assise 2 par rotation autour de la liaison pivot 7 est commandée par deux actionneurs 26.

Une extrémité de chaque actionneur 26 est reliée à pivot sur le premier axe d'articulation A de la pièce de liaison 20 et son autre extrémité étant reliée sur la partie avant de la structure de support 5 par une liaison pivot 27.

Les actionneurs 26 sont disposés de chaque côté de la structure d'assise 2 et sont orientés depuis l'avant de la structure de support 5 vers le haut et l'avant de la structure d'assise 2.

Le siège 1 comporte par ailleurs un repose pieds 30 mobile en translation par rapport au repose jambes 4, de sorte que la longueur totale du repose jambes 4 - repose pieds 30 peut être ajustée par le passager dans l'espace disponible. Le mouvement du repose pieds 30 est commandé par un actionneur 31.

On peut également prévoir que les mouvements d'un appui tête et/ou éventuellement d'autres éléments mobiles du siège soient commandés par des actionneurs.

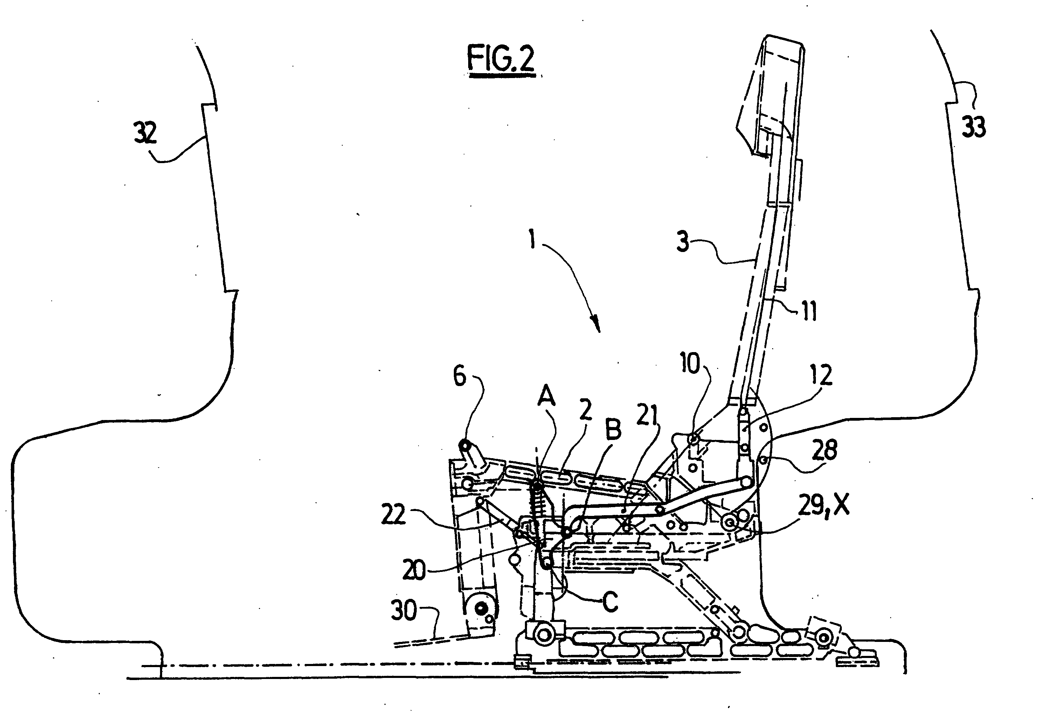

Le siège 1 peut être situé dans un espace compris entre une coque fixe de séparation avant 32 et une coque fixe de séparation arrière 33 représentées sur les figures 2 à 5.
Ces coques fixes de séparation 32, 33 sont fixes et solidaires du sol de l'avion. Elles délimitent ainsi un espace dans lequel le siège 1 peut être déplacé. La distance entre deux coques fixes 32, 33 est variable selon la répartition des sièges à l'intérieur de l'avion.

Les mouvements de l'assise 2, le dossier 3 et la structure de support 5 sont complètement indépendants des coques de séparation 32, 33.

Ces coques 32, 33 peuvent notamment servir de support de tablette ou d'écran vidéo pour le passager.

Le siège 1 comporte également des moyens de commande 40 qui comprennent également un boîtier de commande électronique 41 coopérant avec les actionneurs et coopérant en outre avec des moyens 42 pouvant être actionnés par l'utilisateur pour régler la position du siège.

Ce boîtier de commande électronique 41 peut être programmable.

Les moyens 42 sont par exemple une série de boutons ou de manettes de commande permettant de commander le déplacement des différents éléments mobiles du siège 1.

Dans l'espace définit par deux coques de séparation 32, 33, les moyens de commande 40 du siège lui permettent d'adopter, entre une position droite de décollage et d'atterrissage du siège et une position allongée du siège, diverses positions autorisées par l'espace compris entre ladite coque fixe de séparation avant 32 et ladite coque fixe de séparation arrière 33.

Lorsque la distance entre deux coques de séparation 32, 33 varie d'une installation des sièges à une autre, les limitations pour éviter les interférences avec l'environnement du siège se font uniquement par des restrictions sur la motorisation, les moyens de commande restant identiques.

On peut ainsi définir une enveloppe délimitant les déplacements du siège autorisés par les restrictions sur la motorisation. Cette enveloppe est définie par au moins deux points extrêmes du siège 1, tels que l'extrémité du repose jambes 4 ou du repose pieds 30 quand il est présent et l'extrémité de l'appui tête.

Les restrictions sur la motorisation sont telles que l'enveloppe n'interfère pas avec l'environnement du siège tel que les coques de séparation 32, 33 et éventuellement le sol de l'avion afin d'éviter d'endommager le repose jambes 4 ou le repose pieds 30.

L'ajustement des déplacements extrêmes des différents éléments mobiles du siège 2, 3, 4, 30 en fonction de la forme et/ou de la distance entre les deux coques de séparation 32, 33 se fait par simple réglage du boîtier de commande 41 et/ou des divers actionneurs, sans modifications d'éléments de la structure du siège ou de la cinématique.

Ces actionneurs sont par exemple chacun asservis avec une recopie de position au boîtier de commande programmable 41. En modifiant la programmation de ce boîtier 41, on fait varier l'enveloppe des déplacements autorisés du siège en fonction de la forme et/ou de la position relative des coques de séparation 32, 33.

Il est également possible de placer des butées pour limiter les différents mouvements. D'autres moyens équivalents peuvent également être utiliser pour limiter les mouvements.

L'inclinaison du repose jambes 4 en fonction de l'inclinaison de la structure de dossier 3 est maintenant décrite en détail.

Lorsque la structure de dossier 3 est en position verticale (figure 2), le repose jambes 4 est également en position sensiblement verticale. Les axes A et C de la pièce de liaison 20 sont situés sensiblement l'un au dessus de l'autre, la biellette 22 est orientée depuis l'axe B, vers le haut et vers l'avant de la structure d'assise 2 en direction du repose jambes 4.

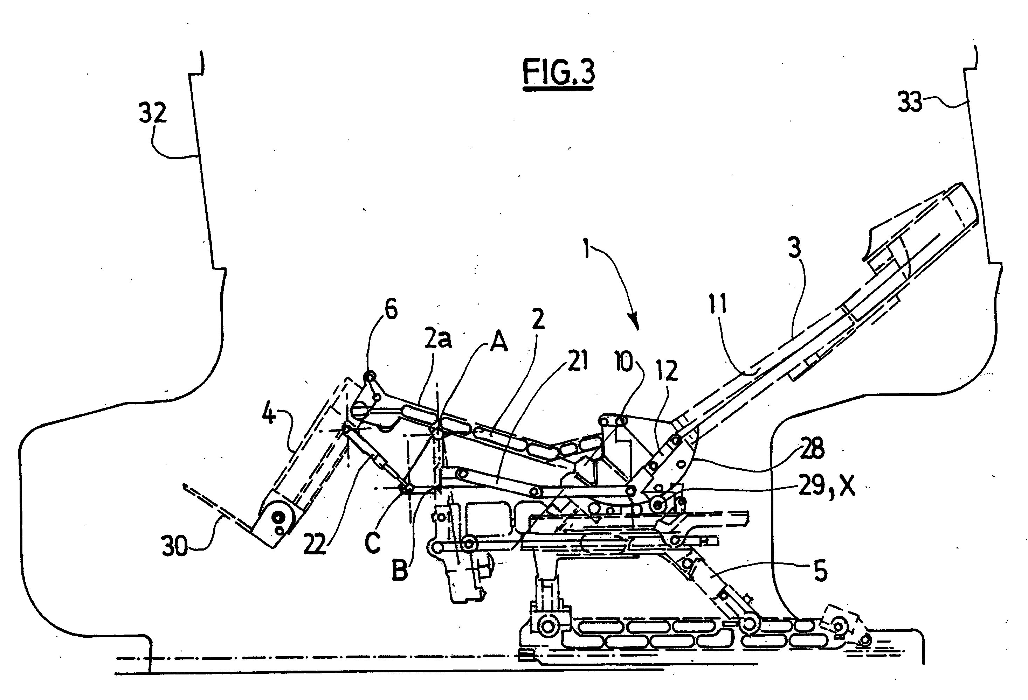

Lorsque la structure de dossier 3 passe de la position verticale à une position inclinée sous l'action de l'actionneur 25 (figure 3), le basculement des extrémités 12 des montants 11 du dossier 3 provoque le déplacement de la bielle 21 dans la direction du repose jambes 4. Ce déplacement entraîne la rotation de la pièce de liaison 20 autour de son axe A dans la direction du repose jambes 4, provoquant le déplacement de la biellette 22 vers le repose jambes 4 et donc le déplacement de ce dernier.

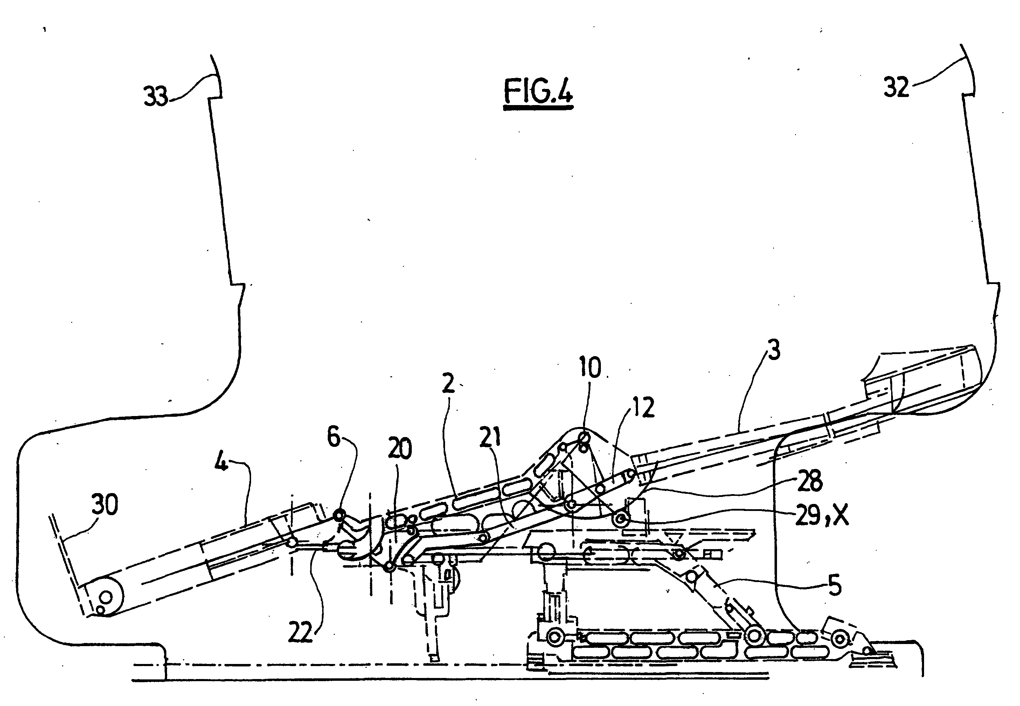

Ce dernier mouvement peut être poursuivi jusqu'à l'inclinaison totale de la structure de dossier 3 (figure 4), les surfaces des repose jambes 4, de l'assise 2 et du dossier 3 étant alors dans la prolongation les unes des autres.

Les longueurs des bielle 21 et biellette 22 ainsi que les dimensions de la pièce de liaison 20 sont telles que le repose jambes 4 et le dossier 3 sont toujours sensiblement parallèles.

Par ailleurs, cette disposition permet également, lorsque le dossier est en position verticale, de conserver la position verticale du repose jambes quelque soit l'inclinaison de l'assise.

Lorsque le dossier est incliné, les moyens de synchronisation permettent de baisser le repose jambes lorsque l'on lève la structure d'assise. Ceci permet d'éviter les interférences avec la coque avant ou le siège situé devant.

L'inclinaison de l'assise 2 étant commandée par l'actionneur 26, la pièce de liaison 20 tourne alors autour de son deuxième axe B.

## Revendications

1. Siège (1) pour véhicule tel qu'un aéronef, comprenant une structure de dossier (3) et une structure d'assise (2) montée pivotante par rapport à la structure de dossier (3), une structure de support (5) de la structure d'assise (2) et de la structure de dossier (3), la structure de dossier (3) étant reliée à la structure de support (5) par une liaison pivot (10), ainsi qu'un repose jambes (4) relié par une liaison pivot (6) à l'extrémité avant de la structure d'assise (2), ledit siège comportant des moyens mécaniques de synchronisation (15) aptes à synchroniser les mouvements de la structure de dossier (3) et du repose jambes (4), lesdits moyens mécaniques de synchronisation (15) étant reliés :
- à la structure de dossier (3) par une liaison pivot (23) située à distance de la liaison pivot (10) entre la structure de dossier (3) et la structure de support (5), entre ladite liaison pivot (10) et l'extrémité inférieure (12) de la structure de dossier,
- au repose jambes (4) par une liaison pivot (24) située à proximité de la liaison pivot (6) entre le repose jambes et la structure d'assise, à une certaine distance de celle-ci,
**caractérisé en ce que** lesdits moyens mécaniques de synchronisation sont reliés à la structure d'assise (2) par une liaison pivot (A) située à proximité de la liaison pivot (6) entre le repose jambes et la structure d'assise, à une certaine distance de celle-ci.

2. Siège selon la revendication 1, **caractérisé en ce que** les moyens mécaniques de synchronisation (15) comprennent :
- au moins une pièce de liaison (20) comportant trois axes d'articulation (A, B, C), un premier axe d'articulation (A) étant relié à la structure d'assise à proximité de la liaison pivot (6) entre le repose jambes (4) et la structure d'assise (2), à une certaine distance de celle-ci;
- au moins une bielle (21) dont une extrémité est reliée à pivot à un deuxième axe d'articulation (B) de ladite pièce de liaison (20) et l'autre extrémité est reliée par une liaison pivot (23) à la structure de dossier (3) à distance de la liaison pivot (10) entre la structure de dossier (3) et la structure de support (10), entre ladite liaison pivot (10) et l'extrémité inférieure (12) de la structure de dossier (3) ;
- au moins une biellette (22) dont une extrémité est reliée à pivot à un troisième axe d'articulation (C) de ladite pièce de liaison (20) et l'autre extrémité est reliée par une liaison pivot (24) au repose jambes (4) à proximité de la liaison pivot (6) entre le repose jambes et la structure d'assise, à une certaine distance de celle-ci.

3. Siège selon la revendication 2, **caractérisé en ce que** les axes d'articulation de la pièce de liaison (20) s'étendent suivant une direction perpendiculaire à la direction longitudinale du siège.

4. Siège selon l'une des revendications 2 ou 3, **caractérisé en ce que** les trois axes d'articulation (A, B, C) de la pièce de liaison (20) ne sont pas situés dans un même plan.

5. Siège selon l'une des revendications 2 à 4, **caractérisé en ce que** la pièce de liaison (20) présente une forme sensiblement triangulaire, les trois axes d'articulation (A, B, C) étant situés chacun dans un angle de ladite pièce (20).

6. Siège selon l'une des revendications 1 à 5, **caractérisé en ce que** la structure de dossier (3) comprend des montants latéraux (11), l'extrémité inférieure (12) d'au moins un montant étant reliée à pivot à la bielle (21).

7. Siège selon l'une des revendications 2 à 6, **caractérisé en ce que** la biellette (22) est un vérin limiteur de charge.

8. Siège selon l'une des revendications 2 à 7, **caractérisé en ce que** la bielle (21) s'étend sensiblement suivant la direction longitudinale du siège, la biellette (22) s'étendant dans un plan sensiblement vertical contenant la bielle (21).

9. Siège selon l'une des revendications 2 à 8, **caractérisé en ce que** les moyens mécaniques de synchronisation (15) comprennent deux ensembles formés chacun d'une bielle (21), d'une biellette (22) et d'une pièce de liaison (20), disposés chacun sur un côté du siège.

10. Siège selon l'une des revendications 1 à 9, **caractérisé en ce qu'**il comporte un repose pieds (30) mobile en translation par rapport au repose jambes (4), et un actionneur (31) commandant la translation dudit repose pieds.

11. Siège selon l'une des revendications 1 à 10, **caractérisé en ce que** la structure de support comprend une partie supérieure (5a) mobile supportant la structure d'assise (2) et une partie inférieure (5b) fixe, ladite partie supérieure (5a) étant mobile en translation par rapport à la partie inférieure (5b) suivant la direction longitudinale du siège, la structure de dossier étant reliée à pivot à ladite partie supérieure (5a).

12. Siège selon l'une des revendications 1 à 11, **caractérisé en ce qu'**il comprend au moins un actionneur de commande (25) de l'inclinaison de la structure de dossier (3) par rapport à la structure de support (5).

13. Siège selon l'une des revendications 1 à 12, **caractérisé en ce qu'**il comprend au moins un actionneur de commande (26) de l'inclinaison de la structure d'assise (2).

14. Siège selon la revendication 13 quand elle dépend de la revendication 2, **caractérisé en ce qu'**une extrémité de l'actionneur de commande (26) de l'inclinaison de la structure d'assise (2) est reliée à pivot audit premier axe d'articulation (A) de la pièce de liaison (20) et l'autre extrémité dudit actionneur (26) est reliée à pivot sur la partie avant de la structure de support (5).

15. Siège selon l'une des revendications 1 à 14, **caractérisé en ce qu'**il comprend des moyens de commande (40) de l'inclinaison de la structure de dossier et de la structure d'assise.

16. Siège selon la revendication 15 lorsqu'elle dépend des revendications 10 à 14, **caractérisé en ce que** les moyens de commande comprennent un boîtier de commande électronique (41) coopérant avec les actionneurs de commande (25, 26) et coopérant en outre avec des moyens (42) pouvant être actionnés par l'utilisateur pour régler la position du siège (1).

17. Siège selon la revendication 16, **caractérisé en ce que** l'ajustement des déplacements des différents éléments (2, 3, 4) mobiles du siège est réalisé par réglage du boîtier de commande (41) et/ou des actionneurs (25, 26).

## Patentansprüche

1. Sitz (1) für Fahrzeuge, wie ein Luftfahrzeug, der Folgendes umfasst: eine Rückenlehnenstruktur (3) und eine Sitzflächenstruktur (2), die drehbar im Verhältnis zur Rückenlehnenstruktur (3) montiert ist, eine Tragstruktur (5) der Sitzflächenstruktur (2) und der Rückenlehnenstruktur (3), wobei die Rückenlehnenstruktur (3) anhand einer Drehverbindung (10) mit der Tragstruktur (5) verbunden ist, sowie eine Beinstütze (4), die durch eine Drehverbindung (6) mit dem vorderen Ende der Sitzflächenstruktur (2) verbunden ist, wobei der Sitz mechanische Synchronisierungsmittel (15) umfasst, die in der Lage sind, die Bewegungen der Rückenlehnenstruktur (3) und der Beinstütze (4) zu synchronisieren, wobei die mechanischen Synchronisierungsmittel (15) verbunden sind:
- mit der Rückenlehnenstruktur (3) durch eine Drehverbindung (23), die sich mit Abstand zu der Drehverbindung (10) zwischen der Rückenlehnenstruktur (3) und der Tragstruktur (5), zwischen der Drehverbindung (10) und dem unteren Ende (12) der Rückenlehnenstruktur (3) befindet,
- mit der Beinstütze (4) durch eine Drehverbindung (24), die sich unweit von der Drehverbindung (6) zwischen der Beinstütze und der Sitzflächenstruktur mit einem gewissen Abstand zu dieser befindet,
**dadurch gekennzeichnet, dass** die mechanischen Synchronisierungsmittel durch eine Drehverbindung (A) mit der Sitzflächenstruktur (2) verbunden sind, die sich unweit von der Drehverbindung (6) zwischen der Beinstütze und der Sitzflächenstruktur mit einem gewissen Abstand zu dieser befindet.

2. Sitz nach Anspruch 1, **dadurch gekennzeichnet, dass** die mechanischen Synchronisierungsmittel (15) Folgendes umfassen:
- mindestens ein Verbindungsteil (20) mit drei Gelenkbolzen (A, B, C), wobei ein erster Gelenkbolzen (A) mit der Sitzflächenstruktur unweit der Drehverbindung (6) zwischen der Beinstütze (4) und der Sitzflächenstruktur (2) mit einem gewissen Abstand zu dieser verbunden ist;
- mindestens eine Stange (21), deren eines Ende drehbar an einen zweiten Gelenkbolzen (B) vom Verbindungsteil (20) verbunden ist und deren anderes Ende durch eine Drehverbindung (23) mit der Rückenlehnenstruktur (3) mit einem Abstand zu der Drehverbindung (10) zwischen der Rückenlehnenstruktur (3) und der Tragstruktur (10), zwischen der Drehverbindung (10) und dem unteren Ende (12) der Rückenlehnenstruktur (3) verbunden ist;
- mindestens ein Schwingarm (22), dessen eines Ende drehbar mit einem dritten Gelenkbolzen (C) des Verbindungsteils (20) verbunden ist und dessen anderes Ende durch eine Drehverbindung (24) mit der Beinstütze (4) unweit von der Drehverbindung (6) zwischen der Beinstütze und der Sitzflächenstruktur mit einem gewissen Abstand zu dieser verbunden ist.

3. Sitz nach Anspruch 2, **dadurch gekennzeichnet, dass** sich die Gelenkbolzen des Verbindungsteils (20) nach einer Richtung erstrecken, die senkrecht zur longitudinalen Richtung des Sitzes verläuft.

4. Sitz nach einem der Ansprüche 2 bis 3, **dadurch gekennzeichnet, dass** sich die drei Gelenkbolzen (A, B, C) des Verbindungsteils (20) nicht auf derselben Ebene befinden.

5. Sitz nach einem der Ansprüche 2 bis 4, **dadurch gekennzeichnet, dass** das Verbindungsteil (20) eine leicht dreieckige Form aufweist, wobei sich die drei Gelenkbolzen (A, B, C) jeweils in einer Ecke von diesem Teil (20) befinden.

6. Sitz nach einem der Ansprüche 1 bis 5, **dadurch gekennzeichnet, dass** die Rückenlehnenstruktur (3) laterale Streben (11) umfasst, wobei das untere Ende (12) von mindestens einer Strebe drehbar mit dem Stab (21) verbunden ist.

7. Sitz nach einem der Ansprüche 2 bis 6, **dadurch gekennzeichnet, dass** der Schwingarm (22) ein lastenbegrenzender Zylinder ist.

8. Sitz nach einem der Ansprüche 2 bis 7, **dadurch gekennzeichnet, dass** sich der Stab (21) leicht nach einer longitudinalen Richtung des Sitzes erstreckt, wobei sich der Schwingarm (22) in einer leicht vertikalen Ebene mit dem Stab (21) erstreckt.

9. Sitz nach einem der Ansprüche 2 bis 8, **dadurch gekennzeichnet, dass** die mechanischen Synchronisierungsmittel (15) zwei Einheiten umfassen, die sich jeweils aus einem Stab (21), einem Schwingarm (22) und einem Verbindungsteil (20) zusammensetzen, die jeweils an einer Seite des Sitzes angeordnet sind.

10. Sitz nach einem der Ansprüche 1 bis 9, **dadurch gekennzeichnet, dass** er eine Beinstütze (30) umfasst, die translatorisch mobil im Verhältnis zur der Beinstütze (4) ist, und ein Stellglied (31), das die Translation der Beinstütze steuert.

11. Sitz nach einem der Ansprüche 1 bis 10, **dadurch gekennzeichnet, dass** die Tragstruktur einen oberen Teil (5a), der mobil ist und die Sitzflächenstruktur (2) trägt, und einen unteren Teil (5b), der fest ist, umfasst, wobei der obere Teil (5a) translatorisch mobil ist im Verhältnis zum unteren Teil (5b) nach einer longitudinalen Richtung des Sitzes, wobei die Rückenlehnenstruktur drehbar mit dem oberen Teil (5a) verbunden ist.

12. Sitz nach einem der Ansprüche 1 bis 11, **dadurch gekennzeichnet, dass** er mindestens ein Stellglied (25) zur Steuerung der Neigung der Rückenlehnenstruktur (3) gegenüber der Tragstruktur (5) umfasst.

13. Sitz nach einem der Ansprüche 1 bis 12, **dadurch gekennzeichnet, dass** er mindestens ein Stellglied (26) zur Steuerung der Neigung der Sitzflächenstruktur (2) umfasst.

14. Sitz nach Anspruch 13, wenn er von Anspruch 2 abhängt, **dadurch gekennzeichnet, dass** ein Ende des Stellglieds (26) zur Steuerung der Neigung der Sitzflächenstruktur (2) drehbar mit dem ersten Gelenkbolzen (A) des Verbindungsteils (20) verbunden ist und dass das andere Ende des Stellglieds (26) drehbar mit dem vorderen Teil der Tragstruktur (5) verbunden ist.

15. Sitz nach einem der Ansprüche 1 bis 14, **dadurch gekennzeichnet, dass** er Mittel (40) zur Steuerung der Neigung der Rückenlehnenstruktur und der Sitzflächenstruktur umfasst.

16. Sitz nach Anspruch 15, wenn dieser von den Ansprüchen 10 bis 14 abhängt, **dadurch gekennzeichnet, dass** die Steuermittel einen elektronischen Steuerkasten (41) umfassen, der zusammen mit den Stellgliedern (25, 26) wirkt und der darüber hinaus zusammen mit Mitteln (42) wirkt, die vom Benutzer betätigt werden können, um die Position des Sitzes (1) einzustellen.

17. Sitz nach Anspruch 16, **dadurch gekennzeichnet, dass** die Anpassung der Bewegungen der unterschiedlichen mobilen Elemente (2, 3, 4) des Sitzes durch die Einstellung des Steuerkastens (41) und/oder der Stellglieder (25, 26) realisiert wird.

## Claims

1. A seat (1) for a vehicle such as an aircraft, comprising a seatback structure (3) and a base plate structure (2) mounted to pivot relative to the seatback structure (3), a support structure (5) of the base plate structure (2) and of the seatback structure (3), the seatback structure (3) being attached to the support structure (5) by a pivot connection (10), as well as a leg rest (4) attached by a pivot connection (6) to the front end of the base plate structure (2), said seat comprising mechanical synchronisation means (15) for synchronising the movements of the seatback structure (3) and of the leg rest (4), said mechanical synchronisation means (15) being attached:
- to the seatback structure (3) by a pivot connection (23) located at a distance from the pivot connection (10) between the seatback structure (3) and the support structure (5), between said pivot connection (10) and the lower end (12) of the seatback structure,
- to the leg rest (4) by a pivot connection (24) located in the vicinity of the pivot connection (6) between the leg rest and the base plate structure, at a certain distance from the latter,
**characterised in that** said mechanical synchronisation means are attached to the base plate structure (2) by a pivot connection (A) located in the vicinity of the pivot connection (6) between the leg rest and the base plate structure, at a certain distance from the latter.

2. The seat as claimed in Claim 1, **characterised in that** the mechanical synchronisation means (15) comprise:
- at least one linking piece (20) comprising three articulation axes (A, B, C), a first articulation axis (A) being connected to the base plate structure in the vicinity of the pivot connection (6) between the leg rest (4) and the base plate structure (2), at a certain distance from the latter;
- at least one connecting rod (21) whereof one end is attached to pivot on a second articulation axis (B) of said linking piece (20) and the other end is attached by a pivot connection (23) to the seatback structure (3) at a distance from the pivot connection (10) between the seatback structure (3) and the support structure (10), between said pivot connection (10) and the lower end (12) of the seatback structure (3);
- at least one rocker bar (22) whereof an end is attached to pivot on a third articulation axis (C) of said linking piece (20) and the other end is attached by a pivot connection (24) to the leg rest (4) in the vicinity of the pivot connection (6) between the leg rest and the base plate structure, at a certain distance from the latter.

3. The seat as claimed in Claim 2, **characterised in that** the articulation axes of the linking piece (20) extend according to a direction perpendicular to the longitudinal direction of the seat.

4. The seat as claimed in any one of Claims 2 or 3, **characterised in that** the three articulation axes (A, B, C) of the linking piece (20) are not located in the same plane.

5. The seat as claimed in any one of Claims 2 to 4, **characterised in that** the linking piece (20) has a substantially triangular shape, the three articulation axes (A, B, C) each being located at a angle to said piece (20).

6. The seat as claimed in any one of Claims 1 to 5, **characterised in that** the seatback structure (3) comprises lateral stanchions (11), the lower end (12) of at least one stanchion being attached to pivot on the connecting rod (21).

7. The seat as claimed in any one of Claims 2 to 6, **characterised in that** the rocker bar (22) is a load limiter jack.

8. The seat as claimed in any one of Claims 2 to 7, **characterised in that** the connecting rod (21) extends substantially according to the longitudinal direction of the seat, with the rocker bar (22) extending in a substantially vertical plane containing the connecting rod (21).

9. The seat as claimed in any one of Claims 2 to 8, **characterised in that** the mechanical synchronisation means (15) comprise two assemblies, each formed by a connecting rod (21), a rocker bar (22) and a linking piece (20), each arranged on one side of the seat.

10. The seat as claimed in any one of Claims 1 to 9, **characterised in that** it comprises a leg rest (30) mobile in translation relative to the leg rest (4), and a solenoid (31) controlling translation of said leg rest.

11. The seat as claimed in any one of Claims 1 to 10, **characterised in that** the support structure comprises an upper mobile part (5a) supporting the base plate structure (2) and a fixed lower part (5b), said upper part (5a) being mobile in translation relative to the lower part (5b) according to the longitudinal direction of the seat, the seatback structure being attached to pivot on said upper part (5a).

12. The seat as claimed in any one of Claims 1 to 11, **characterised in that** it comprises at least one control solenoid (25) of the inclination of the seatback structure (3) relative to the support structure (5).

13. The seat as claimed in any one of Claims 1 to 12, **characterised in that** it comprises at least one control solenoid (26) of the inclination of the base plate structure (2).

14. The seat as claimed in Claim 13, when it depends on Claim 2, **characterised in that** an end of the control solenoid (26) of the inclination of the base plate structure (2) is attached to pivot on said first articulation axis (A) of the linking piece (20) and the other end of said solenoid (26) is attached to pivot on the front part of the support structure (5).

15. The seat as claimed in any one of Claims 1 to 14, **characterised in that** it comprises control means (40) of the inclination of the seatback structure and of the base plate structure.

16. The seat as claimed in Claim 15, when it depends on Claims 10 to 14, **characterised in that** the control means comprise an electronic control panel (41) cooperating with the control solenoids (25, 26) and also cooperating with means (42) capable of being actuated by the operator to regulate the position of the seat (1).

17. The seat as claimed in Claim 16, **characterised in that** adjustment of the displacements of the different mobile elements (2, 3, 4) of the seat is carried out by regulating the control panel (41) and/or the solenoids (25, 26).
